# EUROPEAN PATENT SPECIFICATION

(11) **EP 0 575 145 B1**
(45) Date of publication and mention of the grant of the patent: **03.06.1998**
(21) Application number: 93304649.2
(22) Date of filing: 15.06.1993
(51) Int. Cl.: G05B 19/418

(54) **Open distributed digital control system**
Offenes verteiltes Digitalregelungssystem
Système ouvert de commande numérique réparti

(30) Priority: 16.06.1992 US 899198
(43) Date of publication of application: 22.12.1993
(73) Proprietor: HONEYWELL INC., Minneapolis Minnesota 55408 (US)
(72) Inventor: Phillips, David L., Phoenix, Arizona 85023 (US); Kahn, Wayne C., Phoenix, Arizona 85022 (US); Staggs, Kevin P., Peoria, Arizona 85345 (US)
(74) Representative: Fox-Male, Nicholas Vincent Humbert

(56) References cited:
- ABB REVIEW no. 10, 1989, CH, pp 11-16; PAULY T.: 'ABB Master in control of industrial processes'
- AUTOMATISIERUNGSTECHNISCHE PRAXIS - ATP vol. 33, no. 8, 1991, München, DE, pp 329-332; TH. KÜHNEL: 'Aspekte der Verbindung von Feldbus- mit Prozessbussystemen in der Automatisierungstechnik'

## Description

### BACKGROUND OF THE INVENTION

This invention relates to distributed digital systems, and more particularly, to distributed digital systems having a plurality of nodes coupled to a network for communicating between nodes, wherein a once closed network is opened to permit a variety of nodes to be coupled to the network.

There currently exists systems having a plurality of nodes operatively connected to a bus or network in which the nodes are developed by a single manufacturer who enforces strict control over the design of the nodes and over the functions to be performed by the nodes. Further, a predetermined protocol is utilized by the network which results in a "closed" environment.

In order to allow a user the option of selecting equipment of other manufacturers, having differing protocols, and thereby expanding the capabilities and functionality of these systems, it is desired to have an "open" systems environment which permits the user to connect (directly or indirectly) these equipments of other manufactures having differing designs to the network of the system. By opening up the system to these equipments, the reliability of the system is now susceptible to any errors (bugs, viruses,...) of the new equipment being added which is not under the control of the manufacturer of the system.

Thus, the present invention provides an apparatus and method for connecting at least one differing system into a highly reliable distributed digital system, in the preferred embodiment a control system, thereby opening the control system, while maintaining the high reliability that the system had before opening up the environment.

### SUMMARY OF THE INVENTION

The present invention provides an open distributed digital control system comprising a network, a plurality of nodes, each node operatively connected to said network, each node capable of communicating with each of the other nodes via the network in accordance with a first predetermined protocol for performing a control function of a process, and further wherein each node perform a predefined function which contributes to the control function, said network being operatively connected to a plurality of field devices of the process being controlled, and a universal operator station node, operatively connected to said network, and having a display unit, for displaying at least a control view of the nodes, the system characterised by a processor means, operatively connected to the universal operator station node and further operatively connected to at least one other open system, said processor means communicating with the other open system via a second predetermined protocol, for interfacing graphical display information of the other open system to said universal operator station node, whereby display views of the other open system are displayed on the display unit along with the control view in a windows format, said processor means providing control data in the graphical display information transfer to the universal operator station node thereby controlling the display format.

### BRIEF DESCRIPTION OF THE DRAWINGS

Figure 1 shows a block diagram of a process control system of the preferred embodiment in which the present invention can be utilized;
Figure 2 shows a block diagram of common elements of each physical module of the process control system of Figure 1;
Figure 3 shows a functional block diagram of a typical physical module of the process control system;
Figure 4 shows a partial, functional block diagram of the existing system and the opened system of the preferred embodiment of the present invention;
Figure 5 shows a functional block diagram of an open operator station of the preferred embodiment of the present invention; and
Figure 6 shows a block diagram of a graphics card of the preferred embodiment of the present invention.

### DETAILED DESCRIPTION

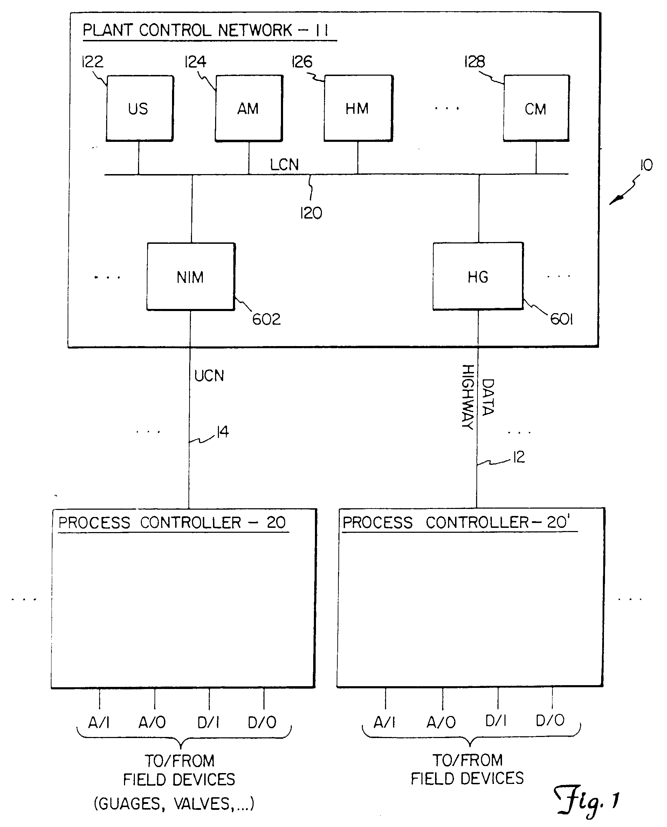

Before describing the present invention, it will be helpful in understanding a closed system environment. Referring to Figure 1, there is shown a block diagram of a process control system 10 of the preferred embodiment in which the present invention can be found. The process control system 10 includes a plant control network 11, and connected thereto is a data highway 12, which permits a process controller 20' to be connected thereto. In the present day process control system 10, additional process controllers 20' can be operatively connected to the plant control network 11 via a corresponding highway gateway 601 and a corresponding data highway 12. A process controller 20, an interface apparatus which includes many new, additions, improvements, and features over the process controller 20', is operatively connected to the plant control network 11 via a universal control network (UCN) 14 to a network interface module (NIM) 602. In the preferred embodiment of the process control system 10, additional process controllers 20 can be operatively connected to the plant control network 11 via a corresponding UCN 14 and a corresponding NIM 602. The process controllers 20, 20' interface the analog input and output signals, and digital input and output signals (A/I, A/O, D/I, and D/O respectively) to the process control system 10 from the variety of field devices (not shown) of the process being controlled which include valves, pressure switches, pressure gauges, thermocouples,....

The plant control network (or more simply network) 11 provides the overall supervision of the controlled process, in conjunction with the plant operator, and obtains all the information needed to perform the supervisory function, and includes an interface with the operator. The plant control network 11 includes a plurality of physical modules, which include a universal operator station (US) 122, an application module (AM) 124, a history module (HM) 126, a computer module (CM) 128, and duplicates (backup or secondary) of these modules (and additional types of modules, not shown) as necessary to perform the required control/supervisory function of the process being controlled. Each of these physical modules is operatively connected to a local control network (LCN) 120 which permits each of these modules to communicate with each other as necessary. The NIM 602 and HG 601 provide an interface between the LCN 120 and the UCN 14, and the LCN 120 and the data highway 12, respectively.

Physical modules 122, 124, 126, 128,... of network 11 of the preferred embodiment are of various specialized functional types. Each physical module is the peer, or equivalent, of the other in terms of right of access to the network's communication medium, or LCN 120, for the purpose of transmitting data to other physical modules of network 11.

Universal operator station module (US) 122 of network 11 is a work station for one or more plant operators. It includes an operator console which is the interface between the plant operator, or operators, and the process or processes of the plant for which they are responsible. Each universal operator station module 122, is connected to the LCN 120, and all communications between the universal operator station module 122, and any other physical module of network 11, is via the LCN 120. Universal operator station module 122 has access to data that is on the LCN 120 and the resources and data available through, or from, any of the other physical modules of network 11. The universal station module 122 includes a cathode ray tube display (CRT) (not shown) which includes a video display generator, an operator keyboard (KB) (not shown), a printer (PRT) (not shown), and can also include (but not shown) a cartridge disk data storage device, trend pen recorders, and status displays, for example.

A history module (HM) 126 provides mass data storage capability. The history module 126 includes at least one conventional disk mass storage device such as a Winchester disk, which disk storage device provides a large volume of nonvolatile storage capability for binary data. The types of data stored by such a mass storage device are typically trend histories, event histories, ....or data from which such histories can be determined, data that constitutes or forms CRT type displays, copies of programs for the physical modules....

An application module (AM) 124 provides additional data processing capability in support of the process control functions performed by the controllers associated with the process control subsystem 20, 20' such as data acquisition, alarming, batch history collection, and provide continuous control computational facilities when needed. The data processing capability of the application module 124 is provided by a processor (not shown) and a memory (not shown) associated with the module.

Computer module (CM) 128 uses the standard or common units of all physical modules to permit a medium-to-large scale, general purpose data processing system to communicate with other physical modules of network 11 and the units of such modules over the LCN 120 and the units of process control subsystems 20, 20' via the highway gateway module 601, and the NIM 602, respectively. Data processing systems of a computer module 128 are used to provide supervisory, optimization, generalized user program preparation and execution of such programs in higher level program languages. Typically, the data processing systems of a computer module 128 have the capability of communicating with other such systems by a communication processor and communication lines.

The local control network 120 (LCN) is a high-speed, bit serial, dual redundant communication network that interconnects all the physical modules of plant control network 11. LCN 120 provides the only data transfer path between the principal sources of data, such as highway gateway module 601, application module 124, and history module 126, and principal users of such data, such as universal operator station module 122, computer module 128, and application module 124. LCN 120 also provides the communication medium over which large blocks of data, such as memory images, can be moved from one physical module such as history module 126 to universal station module 122. LCN 120 is dual redundant in that it consists of two coaxial cables that permit the serial transmission of binary signals over both cables.

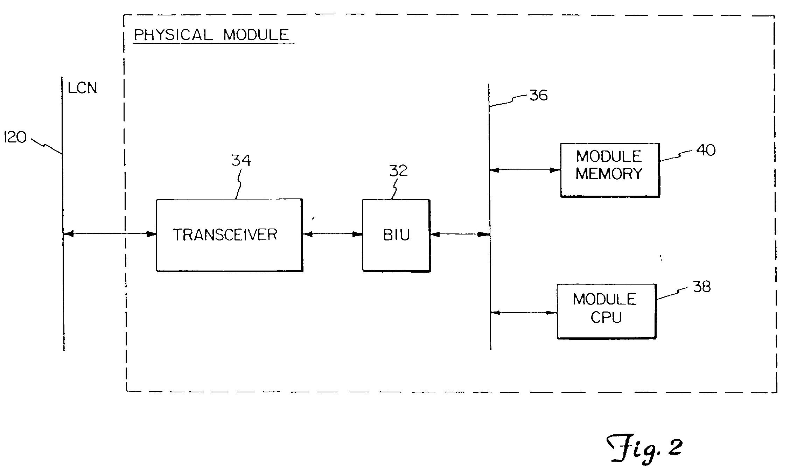

Referring to Figure 2, there is shown a block diagram of the common elements of each physical module of the network 11 or the process control system 10. Each of the physical modules includes a module central processor unit 38 and a module memory 40, a random-access memory (not shown), and such additional controller devices, or units (not shown), which are configured to provide the desired functionality of that type of module, i.e., that of the operator station 122, for example. The data-processing capabilities of each module's CPU 38 and module memory 40 create a distributed processing environment which provides for improved reliability and performance of network 11 and process control system 10. The reliability of network 11 and system 10 is improved because, if one physical module of network 11 fails the other physical modules will remain operational. As a result, network 11 as a whole is not disabled by such an occurrence as would be the case in centralized systems. Performance is improved by this distributed environment in that throughput and fast operator response times result from the increase computer processing resources, and the concurrency and parallelism of the data-processing capabilities of the system.

As mentioned above, each physical module includes the bus interface unit, BIU, 32 which is connected to the LCN 120 by the transceiver 34. Each physical module is also provided with the module bus 36 which, in the preferred embodiment, is capable of transmitting 16 bits of data in parallel, between the module CPU 38 and the module memory 40. Other units, utilized to tailor each type of physical module to satisfy its functional requirements, are operatively connected to module bus 36 so that each such unit can communicate with the other units of the physical module via its module bus 36. The BIU 32 of the physical module initiates the transmission of data over LCN 120. In the preferred embodiment, all transmissions by a BIU 32 are transmitted over the coaxial cables which, in the preferred embodiment, form the LCN 120.

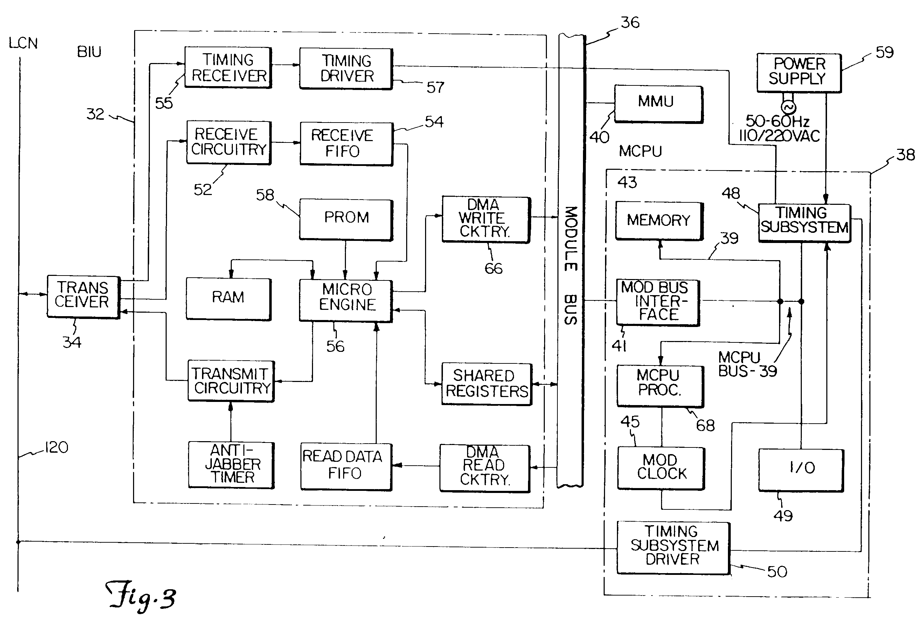

Referring to Figure 3 there is shown a functional block diagram of a typical physical module 122, 124, 126, 128 of the plant control network 11, and includes the bus interface unit (BIU) 32 and the transceiver 34, which connects BIU 32 to the LCN 120. BIU 32 is capable of transmitting binary data over LCN 120 and of receiving data from LCN 120. Transceiver 34 in the preferred embodiment, is transformer coupled to the LCN 120. In the preferred embodiment, the LCN 120 is a dually redundant coaxial cable with the capability of transmitting bit serial data. BIU 32 is provided with a very fast micro-engine 56. In the preferred embodiment, micro engine 56 is made up of bit slice components so that it can process eight bits in parallel, and can execute a 24 bit microinstruction from its programmable read only memory (PROM) 58.

Signals received from the LCN 120 are transmitted by transceiver 34 and receive circuitry 52 to receive FIFO register 54. Micro engine 56 examines the data stored in FIFO register 54 and determines if the information is addressed to the physical module. If the data is an information frame, the received data is transferred by direct memory access (DMA) write circuitry 66 by conventional direct memory access techniques to the physical module memory unit (MMU) 40 over module bus 36.

Communication between MCPU processor 68, a Motorola 68020 microprocessor in the preferred embodiment, and other functional elements of MCPU 38 is via local microprocessor bus 39. Module bus interface element 41 provides the communication link between local bus 39 and module bus 36. Processor 68 executes instructions fetched from either its local memory 43, in the preferred embodiment an EPROM, or from MMU 40. Processor 68 has a crystal controlled clock 45 which produces clock pulses, or timing signals. Input/output (I/O) port 49 provides communication between MCPU 38 and equipment external to the physical module to permit program loading, and the diagnosis of errors, or faults, for example.

Each MCPU 38 includes a timing subsystem 48 which, in response to clock signals from module clock 45 produces fine resolution, synchronization, and real-time, timing signals. Any timing subsystem 48 which is provided with a timing subsystem driver 50, has the capability of transmitting timing information to other physical modules over the LCN 120. Another input to each timing subsystem 48, is timing information which is transmitted over LCN 120 and which is received through transceiver 34, timing receiver 55 and timing driver 57 of BIU 32. Timing pulses from module power supply 59 which are a function of the frequency of the external source of A.C. electric power applied to power supply 59 are used by timing subsystem 48 to correct longer term frequency drift of the clock pulses produced by clock 45.

Additional information of the BIU 32 can be found in U.S. Patent No. 4,556,974. A more detailed description of the process control system 10 can be had by referring to U.S. Patent No. 4,607,256. Additional information of the individual, common, functional blocks of the physical modules can be had by reference to U.S. Patent No. 4,709,347, all of the above-identified patents being assigned to the assignee of the present application, and additional information of the process controller 20' can be had by referencing U.S. Patent No. 4,296,464.

The present invention opens up the existing system, which includes designing in the capability to readily permit nodes of differing designs to communicate to the network, and will now be described.

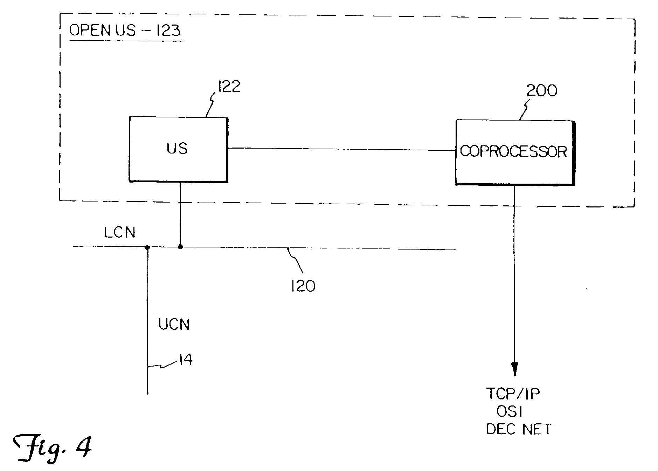

Referring to Figure 4, there is shown a partial functional block diagram of the existing system and the opened system of the present invention. The universal operator station (US) 122 is coupled to a co-processor 200, and the co-processor is coupled to an open system, i.e., interfaces/ protocols of differing design, including task control program/ interface protocol (TCP/IP), open system interface (OSI), DECnet (a product of the Digital Equipment Corporation of Maynard, Massachusetts),.... The universal station 122 is also connected to the LCN 120 as described above. Thus, the new universal operator station (open US) 123 includes the US 122 as described above in conjunction with the co-processor 200. The purpose of the open US 123 is to open the graphical interface to the open systems and to provide information from the closed US to the open systems. The co-processor 200 is structured to permit the interface to other systems, i.e., the open systems without jeopardizing the integrity of the existing system. The co-processor 200 of the preferred embodiment of the present invention is a Motorola 68040 microprocessor which is executing the UNIX operating systems (UNIX is an operating system of the American Telephone and Telegraph Company, ATT, is readily available and is well known to those skilled in the art), and is sometimes referred to as a UNIX co-processor.

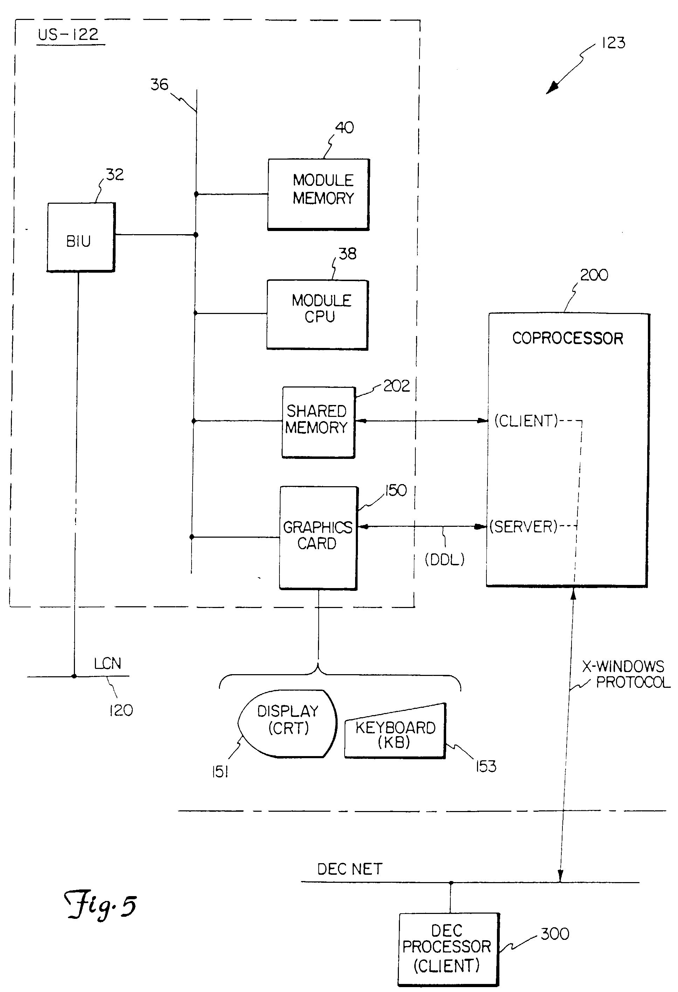

Referring to Figure 5, there is shown a functional block diagram of the open operator station 123 of the preferred embodiment of the present invention. The operator station 122 as described above includes the BIU 32 connected to the module bus 36, the module memory 40, and the module CPU 38, both also connected to the module bus 36. These basic functional blocks are contained in all the physical modules. Additional functional blocks added to the physical module is what gives the physical module its personality apart from any other physical module. The operator station 122 includes a graphics card 150 which interfaces with a display (CRT) and a keyboard (KB) 151, 153. A shared memory 202 is included and is also connected to the module bus 36 which provides for communication between the co-processor 200 and the US physical module 122 (thereby providing communication to the rest of the process control system 10 via the module CPU 38). Thus, the co-processor 200 requests service (e.g., the value of a point, contents of a file, ... or any information of the process control system 10) of the module CPU 38 through shared memory 202. The module CPU 38 then communicates with the appropriate module to perform the requested service in a normal fashion. Once the response is obtained the information is passed to the co-processor 200 via shared memory 202. Since the module CPU 38 is communicating via the LCN 120, the integrity of the LCN (i.e., the system) is maintained and similarly the module memory 40 cannot be corrupted by the co-processor 200.

Also shown in Figure 5 is an example open system (or foreign system), for example, a Digital Equipment Corporation system which includes the DECnet network and protocol and a DEC processor 300 attached to the DECnet network. In the preferred embodiment of the present invention, the communication between the DEC open system and the co-processor 200 is via an X-windows protocol (X-windows being a protocol defined by the Massachusetts Institute of Technology, Cambridge, Massachusetts) for graphical display information, and other open systems standards being used for data exchange. Any requests of the outside system to the LCN is made via the co-processor 200 through the shared memory 202 to the module CPU 38 as described above.

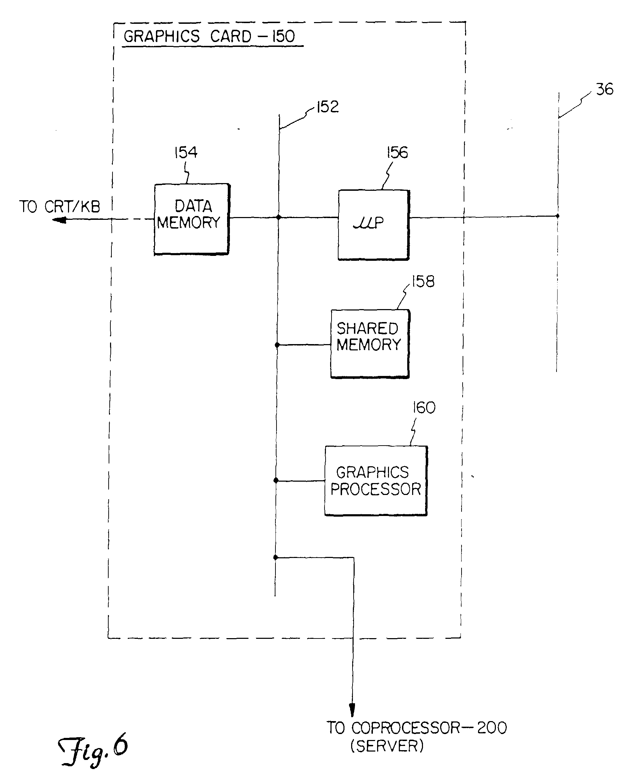

It is also desired to open up the graphics interface such that a display which is not on the LCN can be displayed onto the CRT 151 of the US 122. This is achieved by the interface to the graphic card 150 from the co-processor 200. Referring to Figure 6, there is shown a block diagram of the graphics card 150 of the preferred embodiment of the present invention for creating the open systems. The graphics card includes a card bus 152. Attached to the card bus 152 is a data memory 154 which contains the information which is to be displayed onto the CRT, and also contains some control information. A microprocessor 156 is also coupled to the card bus 152 and further is coupled to the module bus 36. A graphics processor 160 is coupled to the card bus 152 and performs all the processing for developing the information stored in the data memory 154, including some control functions. A shared memory 158 is coupled to the card bus 152. A connection is made from the card bus 152 to the co-processor 200, thereby providing the interface mentioned above to the graphics card 150 from the co-processor 200. The microprocessor 156 of the preferred embodiment of the present invention is a Motorola 68020 processor. The graphics card 150 is a two port graphics card, one port of the graphics card being tied to the module bus 36 which is how a display is driven from LCN. The LCN 120 provides a "single window to the process," i.e., a screen display of what the process/process control system is doing. The second port is coupled to the co-processor 200 and provides the windows interface for the universal station 122. The windows interface is the X-windows interface which is well defined and well known to those skilled in the art (the interface being defined by MIT, Cambridge, Massachusetts). It is through the interface from the co-processor 200 that all the window displays [i.e., the screen display(s) of the open system(s)] and windows controls are performed, including commands to the graphic card 150 to specify where to place the single window to the process on the screen of the CRT 151. The interface between the graphics card 150 and the co-processor 200 is the full windows interface. One of the windows is the display referred to above as the "single window to the processor" (sometimes referred to as the LCN window). The co-processor 200 commands the graphics card 150 where the LCN window is to be placed on the CRT 151 and its relative size on the display. X-windows is a well defined protocol of how to communicate with the graphics card 150 (or any graphics card) and display, and a computer permitting many windows to be displayed. This includes displaying at least one window from the LCN and/or at least one window from the open system 300. In this system, a server is defined in X-windows as the machine that is driving the display (or that portion of the co-processor 200 which interfaces to the graphics card 150), and a client is the application program, in the present embodiment, the DEC processor 300.

The client 300 can have data which is desired to be displayed. The client 300 communicates with the server portion of the co-processor 200 through an X-windows protocol indicating data to be displayed. The server portion of the co-processor 200 communicates with the graphics card 150 through a device dependent layer (DDL) and is provided by the vendor of the graphics card, or in X-windows is via DDX protocol. The microprocessor 156 maintains the integrity of the card bus 152 into the data memory 154. The processing of the data to be displayed on the CRT 151 is performed by the graphics processor 160. When a predetermined data screen is to be displayed, the microprocessor 156 (which accepts requests from the LCN 120 via module bus 36) places the data in shared memory 158, and is subsequently processed by the graphics processor 160, and is then stored in data memory 154. When the open system 300 (via the client) desires to display some information, the information is communicated to the server portion of the co-processor 200 which then stores the information in the shared memory 158. The graphics processor 160 then processes that information and stores it in the data memory 154 for display. In that manner, and under the control of the graphics processor 160, the plurality of displays, i.e., windows, is displayed on the CRT 151.

It will be understood by those skilled in-the art that the X-window protocol is essentially the open interface standard, the X-window protocol being readily available and well known to those skilled in the art. In the preferred embodiment the UNIX operating system is utilized, the UNIX operating system being able to run on many commercially available processors. Further information on the preferred embodiment of the graphics card 150 of the preferred embodiment of the US 122 can be had by reference to U.S. Patent Numbers 4,490,797 and 4,663,619, although it will be understood that any graphics card can be utilized as discussed above. The graphics processor 160 of the preferred embodiment of the present invention is a Texas Instruments (TI) TMS 34020. The microprocessor 156 and the module CPU 38 is a Motorola 68020. The co-processor 200 of the preferred embodiment of the present invention is a Motorola 68040, having bus capability with the other microprocessors of the system. It will be understood that a variety of processors can be utilized including a reduced instruction set processor which is available from Hewlett Packard among other processor manufacturers.

Although the preferred embodiment utilizes the UNIX operating system, it will be recognized by those skilled in the art that any operating system can be utilized. Although the co-processor 200 is controlling the display in the preferred embodiment the graphics card can also perform the display control. Since X-windows was readily available and performed the desired display control function, X-windows was utilized to take advantage of the availability of the desired control function. It will be recognized by those skilled in the art that implementation of the present invention is not limited to X-windows, and that any protocol can be utilized.

Thus it can be seen that the process control system 10 is open system permitting other system to interface into the LCN of the process control system and, because of the communication scheme as described above, the integrity of the process control system 10 is maintained.

## Claims

1. An open distributed digital control system (11) comprising a network (120), a plurality of nodes (128, 124, 126...), each node operatively connected to said network, each node capable of communicating with each of the other nodes via the network in accordance with a first predetermined protocol for performing a control function of a process, and further wherein each node perform a predefined function which contributes to the control function, said network being operatively connected to a plurality of field devices of the process being controlled, and a universal operator station node (122), operatively connected to said network (120), and having a display unit(151), for displaying at least a control view of the nodes, the system characterised by a processor means (200), operatively connected to the universal operator station node and further operatively connected to at least one other open system (DECNET), said processor means communicating with the other open system via a second predetermined protocol, for interfacing graphical display information of the other open system to said universal operator station node, whereby display views of the open system are displayed on the display unit along with the control view in a windows format, said processor means providing control data in the graphical display information transfer to the universal operator station node thereby controlling the display format.

2. A system according to Claim 1, charcterised in that the second predetermined protocol is the X-windows protocol.

3. A system according to any preceding Claim, characterised in that the first predetermined protocol is a token passing protocol.

4. A system according to any preceding Claim, characterised in that the plurality of nodes (122, 124, 126...) includes a computer module means (128) for providing a general data processing function to provide a general supervisory and control operation of the process being controlled.

5. A system according to any peceding Claim, characterised in that the plurality of nodes (122, 124, 126...) comprises an application module means (124) for providing additional data processing capability of the process being controlled.

6. A system according to any preceding Claim, characterised in that the plurality of nodes comprises a history module (126) means for providing mass data storage capability for the system.

7. A system according to any preceding Claim, characterised by:
a process control interface (20), interposed between the network and at least one field device, thereby interfacing the analog and digital, input and output signals of the field devices to exercise immediate and specific control of the process being controlled and reporting information and status to the network.

8. A system according to Claim 8, characterised in that said plurality of nodes further includes an application module means for providing additional data processing capability for said process controller interface.

9. A system according to any preceding Claim, characterised in that each of said plurality of nodes includes common elements, said common elements comprising:
a) a bus interface unit (32), operatively connected to the network, for communicating over the network;
b) module bus (36);
c) module memory (40), operatively connected to the module bus, for storing information required of the node, and
d) module computer processing unit (CPU) (38), operatively connected to said module bus, said bus interface unit also being connected to module bus, the module CPU performing the processing of the node and communicating to the network via the module bus and bus interface unit.

10. A system according to any preceding Claim, characterised in that the universal operator station node further comprises:
graphics means (150), operatively connected to said processor means (200) and to module bus (36), for generating formatted display information from graphical display information received from the processor means and the module bus to be presented on the display unit in response to the control information received from the processor means.

## Patentansprüche

1. Offenes, verteiltes digitales Steuersystem (11), aufweisend ein Netzwerk (120) und mehrere Knoten (122,124,126 ...), wobei jeder Knoten operativ an das Netzwerk angeschlossen ist, jeder Knoten in der Lage ist. mit jedem anderen Knoten über das Netzwerk gemäß einem ersten vorbestimmten Protokoll einen Dialog zu führen, um eine Steuerfunktion eines Prozesses auszuführen, und wobei ferner jeder Knoten eine vorbestimmte Funktion ausführt und das Netzwerk operativ an mehrere Feldgeräte des gesteuerten Prozesses angeschlossen ist. und wobei ein universeller Bedienstationsknoten (122) operativ an das Netzwerk (120) angeschlossen ist und eine Anzeigeeinheit (151) besitzt, um wenigstens eine Steuerübersicht der Knoten anzuzeigen, **gekennzeichnet durch** einen Prozessor (200), der operativ an den universellen Bedienstationsknoten und ferner operativ an wenigstens ein anderes offenes System (DECNET) angeschlossen ist, wobei der Prozessor mit dem offenen System über ein zweites vorbestimmtes Protokoll den Dialog führt, um eine Schnittstelle für graphische Anzeigeinformation des anderen Systems mit dem universellen Bedienstationsknoten zu bilden, wobei Anzeigeübersichten des offenen Systems auf der Anzeigeeinheit zusammen mit der Steuerübersicht in einem Fensterformat dargestellt werden und der Prozessor Steuerdaten in der graphischen Anzeige-Informationsübertragung an den universellen Bedienstationsknoten vorgibt. wodurch das Darstellungsformat gesteuert wird.

2. System nach Anspruch 1, **dadurch gekennzeichnet**, daß das zweite vorbestimmte Protokoll das X-Fenster-Protokoll ist.

3. System nach nach irgendeinem vorhergehenden Anspruch, **dadurch gekennzeichnet**, daß das erste vorbestimmte Protokoll ein Token-Weitergabeprotokoll ist.

4. System nach nach irgendeinem vorhergehenden Anspruch, **dadurch gekennzeichnet**, daß die mehreren Knoten (122,124,126 ...) einen Computermodul (128) zur Vorgabe einer allgemeinen Datenverarbeitungsfunktion umfassen, um eine allgemeine Überwachung und eine Steueroperation des gesteuerten Prozesses vorzugeben.

5. System nach nach irgendeinem vorhergehenden Anspruch, **dadurch gekennzeichnet**, daß die mehreren Knoten (122,124,126 ...) einen Anwendungsmodul (124) umfassen, um eine zusätzliche Datenverarbeitungsmöglichkeit des gesteuerten Prozesses vorzugeben.

6. System nach irgendeinem vorhergehenden Anspruch, **dadurch gekennzeichnet**, daß die mehreren Knoten einen Verlaufsmodul (126) umfassen, um eine Massen-Datenspeichermöglichkeit für das System vorzugeben.

7. System nach nach irgendeinem vorhergehenden Anspruch, **gekennzeichnet durch**:
eine Prozeß-Steuerschnittstelle (20), die zwischen dem Netzwerk und wenigstens einem Feldgerät angeordnet ist, wodurch eine Schnittstelle für die analogen und digitalen Ein- und Ausgangssignale der Feldgeräte gebildet wird, um eine unmittelbare und spezifische Steuerung des gesteuerten Prozesses auszuüben und Information und den Status an das Netzwerk zu berichten.

8. System nach Anspruch 7, **dadurch gekennzeichnet**, daß die mehreren Knoten ferner einen Anwendungsmodul umfassen, um eine zusätzliche Datenverarbeitungsmöglichkeit für die Prozeß-Steuerschnittstelle vorzugeben.

9. System nach irgendeinem vorhergehenden Anspruch, **dadurch gekennzeichnet**, daß die mehreren Knoten gemeinsame Elemente enthalten, welche gemeinsamen Elemente umfassen:
a) eine Bus-Schnittstelleneinheit (32), die operativ an das Netzwerk angeschlossen ist, um über das Netzwerk einen Dialog zu führen;
b) einen Modulbus (36);
c) einen Modulspeicher (40), der operativ an den Modulbus angeschlossen ist, um von dem Knoten geforderte Information zu speichern; und
d) eine Modulcomputer-Verarbeitungseinheit (CPU) (38), die operativ an den Modulbus angeschlossen ist, wobei die Bus-Schnittstelleneinheit ebenfalls an den Modulbus angeschlossen ist und die Modul-CPU die Verarbeitung des Knotens und den Dialog mit dem Netzwerk über den Modulbus und die Bus-Schnittstelleneinheit durchführt.

10. System nach irgendeinem vorhergehenden Anspruch, **dadurch gekennzeichnet**, daß der universelle Bedienstationsknoten ferner umfaßt: eine Graphikeinrichtung (150), die operativ an den Prozessor (200) und den Modulbus (36) angeschlossen ist, um eine formatierte Darstellungsinformation aus der graphischen Darstellungsinformation zu erzeugen. die von dem Prozessor und dem Modulbus empfangen wird und der Anzeigeeinheit auf Grund der von dem Prozessor empfangenen Steuerinformation dargeboten wird.

## Revendications

1. Système ouvert de commande numérique réparti (11) comportant un réseau (120), une multiplicité de noeuds (128, 124, 126 ...), chaque noeud étant relié de manière opérationnelle audit réseau, chaque noeud étant capable de communiquer avec chacun des autres noeuds par l'intermédiaire du réseau suivant un premier protocole prédéterminé afin de réaliser une fonction de commande d'un processus, et dans lequel en outre chaque noeud remplit une fonction prédéterminée qui contribue à la fonction de commande, ledit réseau étant relié de manière opérationnelle à une multiplicité de dispositifs de terrain du processus qui est commandé, et un noeud de station d'opérateur universelle (122), relié de manière opérationnelle audit réseau (120), et ayant une unité d'affichage (151), destinée à afficher au moins une vue de commande des noeuds, le système étant caractérisé par des moyens de traitement (200), reliés de manière opérationnelle au noeud de station d'opérateur universelle et reliés en outre de manière opérationnelle à au moins un autre système ouvert (DEC NET), lesdits moyens de traitement communiquant avec l'autre système ouvert par l'intermédiaire d'un deuxième protocole prédéterminé, afin d'assurer l'interface d'une information d'affichage graphique de l'autre système ouvert avec ledit noeud de station d'opérateur universelle, de sorte que des vues d'affichage du système ouvert sont affichées sur l'unité d'affichage avec la vue de commande dans un format de fenêtrage, lesdits moyens de traitement délivrant des données de commande dans le transfert d'information d'affichage graphique au noeud de station d'opérateur universelle afin de commander ainsi le format d'affichage.

2. Système selon la revendication 1, caractérisé en ce que le deuxième protocole prédéterminé est le protocole X-windows.

3. Système selon l'une quelconque des revendications précédentes, caractérisé en ce que le premier protocole prédéterminé est un protocole à passage de jeton.

4. Système selon l'une quelconque des revendications précédentes, caractérisé en ce que la multiplicité de noeuds (122, 124, 126 ...) comprend des moyens de module d'ordinateur (128) destinés à procurer une fonction de traitement de données générale afin d'assurer une opération de supervision générale et de commande du processus qui est commandé.

5. Système selon l'une quelconque des revendications précédentes, caractérisé en ce que la multiplicité de noeuds (122, 124, 126 ...) comprend des moyens de module d'application (124) destinés à procurer une capacité de traitement de données additionnelle au processus qui est commandé.

6. Système selon l'une quelconque des revendications précédentes, caractérisé en ce que la multiplicité de noeuds comprend des moyens de module d'historique (126) destinés à procurer une capacité de stockage de masse de données pour le système.

7. Système selon l'une quelconque des revendications précédentes, caractérisé par :
une interface de commande de processus (20), interposée entre le réseau et au moins un dispositif de terrain, assurant ainsi l'interface des signaux d'entrée et de sortie, analogiques et numériques, des dispositifs de terrain afin d'exercer une commande immédiate et spécifique du processus qui est commandé et rapportant l'information et l'état au réseau.

8. Système selon la revendication 7, caractérisé en ce que ladite multiplicité de noeuds comprend en outre des moyens de module d'application destinés à procurer une capacité de traitement de données additionnelle à ladite interface de commande de processus.

9. Système selon l'une quelconque des revendications précédentes, caractérisé en ce que chaque noeud de ladite multiplicité de noeuds comprend des éléments communs, lesdits éléments communs comportant :
a) une unité d'interface de bus (32), reliée de manière opérationnelle au réseau, afin de communiquer sur le réseau ;
b) un bus de module (36);
c) une mémoire de module (40), reliée de manière opérationnelle au bus de module, afin de stocker l'information requise du noeud, et
d) une unité de traitement d'ordinateur (CPU) de module (38), reliée de manière opérationnelle audit bus de module, ladite unité d'interface de bus étant également reliée de manière opérationnelle au bus de module, l'unité CPU de module réalisant le traitement du noeud et communiquant avec le réseau par l'intermédiaire du bus de module et de l'unité d'interface de bus.

10. Système selon l'une quelconque des revendications précédentes, caractérisé en ce que le noeud de station d'opérateur universelle comporte en outre :
des moyens graphiques (150), reliés de manière opérationnelle aux dits moyens de traitement (200) et au bus de module (36), afin de générer une information d'affichage formatée à partir d'une information d'affichage graphique reçue des moyens de traitement et du bus de module de façon à être présentée sur l'unité d'affichage en réponse à l'information de commande reçue des moyens de traitement.
